# EUROPÄISCHE PATENTSCHRIFT

(11) **EP 2 472 432 B1**
(45) Veröffentlichungstag und Bekanntmachung des Hinweises auf die Patenterteilung: **03.06.2015**
(21) Anmeldenummer: 11009759.9
(22) Anmeldetag: 10.12.2011
(51) Int. Cl.: G06K 7/10, A47F 9/04, G07G 1/00

(54) **Vorrichtung zum Erfassen von Waren, Anordnung und Betriebsverfahren**
Device for collecting goods, assembly and operating method
Dispositif de détection de marchandises, agencement et procédé de fonctionnement

(30) Priorität: 04.01.2011 DE 102011000027
(43) Veröffentlichungstag der Anmeldung: 04.07.2012
(73) Patentinhaber: Wincor Nixdorf International GmbH, 33106 Paderborn (DE)
(72) Erfinder: Klein, Gordon, 14624 Dallgow (DE)

(56) Entgegenhaltungen:
- US-A1- 2008 302 607

## Beschreibung

Die Erfindung betrifft eine Vorrichtung zum Erfassen von Waren, insbesondere zum Erfassen einer die Waren identifizierenden Markierung, mit einer Transporteinrichtung zum Transportieren der Waren und mit einer ortsfest an der Transporteinrichtung angeordneten Abtasteinrichtung zum berührungslosen optischen Abtasten der Waren während des Transports.

Ferner betrifft die Erfindung eine Anordnung zum Erfassen von Waren, insbesondere zum Erfassen einer die Waren identifizierenden Markierung, an einem Selbstbedienungskassensystem mit einer zentralen Erfassungsvorrichtung für Waren und mit wenigstens zwei dezentralen Erfassungsvorrichtungen für Waren.

Weiterhin umfasst die Erfindung ein Verfahren zum Betrieb der Erfassungsvorrichtung, wobei auf der Transporteinrichtung transportierte Waren sequentiell der Abtasteinrichtung zugeführt und dort erfasst werden.

Bekannt ist, Selbstbedienungskassensysteme zur automatisierten Erfassung von Waren mit einem sogenannten Tunnelscanner auszustatten. Ein derartiges System beschreibt die DE 10 2009 013 636 A1. Hierbei legt ein Kunde die von ihm in einem Warenkorb gesammelten Waren in einer beliebigen Orientierung auf ein Transportband einer Transporteinrichtung. Die Waren werden während des Transports mittels einer Abtasteinrichtung berührungslos abgetastet und anschließend an einer Warensammelstelle bevorratet. Die Abtasteinrichtung dient dazu, eine Oberfläche der zu erfassenden Waren möglichst vollständig zu scannen. Typischerweise sind hierzu eine Mehrzahl von optisch wirkenden Abtasteinheiten an einem sich torbogenartig über das Transportband der Transporteinrichtung erstreckenden Gestell der Abtasteinrichtung gehalten. Auf diese Weise ist es möglich, insbesondere die Seitenflächen sowie die Oberseite der Waren optisch zu erfassen. Zusätzlich ist bekannt, eine weitere Abtasteinheit der Abtasteinrichtung im Bereich des Torbogens derart unterhalb der Transporteinrichtung anzuordnen, dass über einen schmalen Spalt der Transporteinrichtung eine Auflageseite der Waren zusätzlich erfasst werden kann. Obwohl sich eine derartige Vorrichtung zur automatisierten Erfassung von Waren grundsätzlich bewährt hat, können beispielsweise sogenannte Wiegewaren, die zur Preisermittlung gewogen werden müssen, mittels der beschriebenen Vorrichtung nicht automatisiert erfasst werden. Ebenso kann es mitunter bei besonders sperrigen Artikeln zu Problemen kommen. Diese Artikel werden heute an einer separaten Nacherfassungsstation in einem dem vorstehend beschriebenen automatisierten Erfassungsvorgang nachgelagerten weiteren Erfassungsvorgang manuell nacherfasst.

Eine manuelle Nacherfassungsvorrichtung kann beispielsweise als eine sogenannte Scann-and-Bag-Vorrichtung ausgebildet sein. Eine derartige Vorrichtung ist beispielsweise aus der DE 10 2005 061 734 A1 bekannt. Sie weist eine Auflagefläche zur Auflage der zu erfassenden Waren, eine Abtasteinrichtung mit einer oder mehreren Abtasteinheiten zur optischen Abtastung der auf der Auflagefläche aufliegenden Waren sowie typischerweise eine ebenfalls der Auflagefläche zugeordneten Wägeeinheit zur Erfassung eines Gewichts der Waren auf.

Das manuelle Nacherfassen kann vom Kunden selbst oder einer hierzu autorisierten Aufsichtsperson vorgenommen werden. Typischerweise ist der Kunde, dessen Waren nacherfasst werden müssen, jedoch gezwungen sich zweimalig an einer Erfassungsvorrichtung anzustellen bzw. die Waren der beiden Erfässungsvorgänge separat zu bezahlen. Zudem besteht ein hoher Investitionsbedarf, da eine Mehrzahl unterschiedlicher Erfassungsvorrichten bereitzustellen ist. Hierbei können insbesondere die Kosten für den Tunnelscanner beträchtlich sein.

US 2008 0302607 A1 offenbart eine Vorrichtung mit den Merkmalen des Oberbegriffs des Anspruchs 1.

Aufgabe der vorliegenden Erfindung ist es daher, eine kostengünstige Erfassungsvorrichtung und Anordnung für Selbstbedienungskassensysteme vorzuschlagen. Ferner ist es Aufgabe der Erfindung, ein Verfahren zum Betrieb der Erfassungsvorrichtungen anzugeben.

Zur Lösung dieser Aufgabe ist die Erfindung in Verbindung mit dem Oberbegriff des Patentanspruchs 1 dadurch gekennzeichnet, dass die Transporteinrichtung Mittel aufweist, um Waren der Abtasteinrichtung über einen ersten Zuführweg und über einen zweiten Zuführweg zuzuführen, um über den ersten Zuführweg zugeführte Waren nach der Erfassung über einen ersten Abfuhrweg einer ersten Warensammelstelle zuzuführen und um über den zweiten Zuführweg zugeführte Waren nach dem Erfassen über einen zweiten Abfuhrweg einer zweiten Warensammelstelle zuzuführen.

Der besondere Vorteil der Erfindung besteht darin, dass durch das Vorsehen von zwei getrennten Zuführwegen, von zwei getrennten Abfuhrwegen und zwei separaten Warensammelstellen eine zentrale Abtasteinrichtung gemeinsam von zwei Kunden genutzt werden kann. Somit wird der Auslastungsgrad der beispielsweise als Tunnelscanner ausgebildeten Erfassungsvorrichtung signifikant erhöht mit der Folge, dass der gleiche Durchsatz mit weniger Erfassungsvorrichtungen erzielt werden kann. Infolgedessen sinken die Investitionskosten des Einzelhändlers.

Nach einer bevorzugten Ausführungsform der Erfindung weist die Transporteinrichtung eine zentrale Transporteinheit zum Transport der Waren in eine Warentransportrichtung während des Abtastens derselben mittels der Abtasteinrichtung, eine dem ersten Zuführweg zugeordnete erste dezentrale Transporteinheit zum Zuführen der Waren entlang des ersten Zuführweges zu der zentralen Transporteinheit bzw. eine dem zweiten Zuführweg zugeordnete zweite dezentrale Transporteinheit zum Zuführen der Waren auf dem zweiten Zuführweg zu der zentralen Transporteinheit auf. Ferner können dem ersten Abfuhrweg eine dritte dezentrale Transporteinheit und dem zweiten Abfuhrweg eine vierte dezentrale Transporteinheit zum Abtransport der Waren von der Abtasteinrichtung und zur Zuführung der Waren zu der ersten Warensammelstelle bzw. zu der zweiten Warensammelstelle zugeordnet sein. Eine der zentralen Transporteinheit zugeordnete und in Transportrichtung gesehen vor der Abtasteinrichtung angeordnete Sortiereinheit kann vorgesehen sein zum Umlenken der Waren, wobei ein Stellglied der Sortiereinheit in einer ersten Sortierstellung derselben die Waren in Richtung der ersten Warensammelstelle und in einer zweiten Sortierstellung der Sortiereinheit in Richtung der zweiten Warensammelstelle umlenkt. Vorteilhaft wird hierdurch die Möglichkeit geschaffen, dass die erfindungsgemäße Erfassungsvorrichtung von beiden Kunden in gewohnter Weise bedient werden kann. Der Kunde legt seine Waren beispielsweise im Bereich der ersten dezentralen Transporteinheit auf die Transporteinrichtung auf. Die Ware wird dann automatisch der Abtasteinrichtung zugeführt und erfasst und anschließend dem Kunden in der ersten Warensammelstelle zur Entnahme bereitgestellt. Die kombinierte Erfassungsvorrichtung kann daher von dem Kunden quasi intuitiv bedient werden. Eine Umgewöhnung bzw. Einweisung des Kunden entfällt mit der Folge, dass die Akzeptanz für die neue Technik hoch und der Betreuungsaufwand für den einzelnen Kunden gering ist.

Nach einer Weiterbildung der Erfindung ist der ersten dezentralen Transporteinheit und der zweiten dezentralen Transporteinheit eine Sensorikeinheit zugeordnet zur Erfassung des Auflegevorgangs von Waren durch den Kunden. Vorteilhaft kann der Erfassungsvorgang durch die Sensorikeinheit gestartet werden, sobald von der Sensorikeinheit zu erfassende Waren identifiziert wurden. Dabei kann die Sensorikeinheit zwischen der ersten dezentralen Transporteinheit bzw. der zweiten dezentralen Transporteinheit zugeordneten Waren unterscheiden, so dass die Waren kundenspezifisch erfasst werden können. Die Sensorikeinheit kann zu diesem Zweck beispielsweise einen Näherungssensor, einen Gewichtssensor bzw. einen Lichtschrankensensor aufweisen. Selbstverständlich können auch andere als die genannten Sensoren zur Identifikation des Auflegevorgangs Verwendung finden.

Zur Lösung der Aufgabe weist die Erfindung die Merkmale des Patenanspruchs 5 auf.

Der besondere Vorteil der Erfindung nach Patentanspruch 5 besteht darin, dass durch die Kombination der unterschiedlichen Erfassungsvorrichtungen zu einer gemeinsamen Anordnung eine autarke Erfassungsinsel geschaffen wird. Die Kunden können hierbei frei entscheiden, ob sie ihre Waren mittels der zentralen Erfassungsvorrichtung (Tunnelscanner) automatisiert scannen lassen oder zur Erfassung der Waren die kundespezifische und/oder manuell erfassbare dezentrale Erfassungsvorrichtung nutzen. Die dezentralen Erfassungsvorrichtungen können hierbei beispielsweise als sogenannte Scann-and-Bag-Vorrichtungen ausgebildet sein. Insbesondere erlaubt die Erfassungsinsel, in einem einheitlichen Erfassungsvorgang sowohl die automatisierte Erfassung von Waren mittels der zentralen Erfassungsvorrichtung als auch die dezentrale Erfassung von Wiegewaren oder anderen, nicht automatisiert mittels der dezentralen Erfassungsvorrichtung erfassbaren, beispielsweise besonders sperrigen Waren. Für den Kunden entfällt somit das vielfach als störend empfundene, zeitaufwändige Nacherfassen einzelner Waren. Für den Einzelhändler ergibt sich der Vorteil, dass auf Vorrichtungen zum manuellen Nacherfassen der Waren verzichtet werden kann. Der Kunde kann die zugeordnete dezentrale Erfassungsvorrichtung und die zentrale Erfassungsvorrichtung parallel bzw. zeitgleich nutzen, so dass der Erfassungsvorgang beschleunigt und der Durchsatz weiter erhöht wird.

Nach einer bevorzugten Ausführungsform der Erfindung ist eine Bezahleinrichtung datentechnisch sowohl mit der zentralen Erfassungsvorrichtung als auch mit den dezentralen Erfassungsvorrichtungen gekoppelt derart, dass der Kunde seine gesamten Waren in einem einzigen Bezahlvorgang bezahlen kann. Dies ist unabhängig davon, ob er alle Waren an der zentralen Erfassungsvorrichtung, alle Waren an der ihm zugeordneten dezentralen Erfassungsvorrichtung oder seine Waren mittels beider Erfassungsvorrichtungen parallel erfassen lässt.

Nach einer Weiterbildung der Erfindung ist die zentrale Erfassungsvorrichtung doppel-T-förmig ausgebildet, wobei in gegenüberliegenden Ausnehmungen der doppel-T-förmigen zentralen Erfassungsvorrichtung jeweils eine der beiden dezentralen Erfassungsvorrichtungen angeordnet ist und wobei der erste Zuführweg und der erste Abfuhrweg die dezentrale Erfassungsvorrichtung und der zweite Zuführweg und der zweite Abfuhrweg die zweite dezentrale Erfassungsvorrichtung U-förmig umgeben. Vorteilhaft kann durch die T-förmige Ausgestaltung der zentralen Erfassungsvorrichtung und die räumliche Integration der beiden dezentralen Erfassungsvorrichtungen in die zentrale Erfassungsvorrichtung eine kompakt bauende, lokale Anordnung geschaffen werden. Demzufolge ist der Platzbedarf für die Erfassungsanordnung gering mit der Folge, dass dem Einzelhändler bei einem konstanten gesamten Platzangebot mehr Raum für die Anbietung und Präsentation der Waren zur Verfügung steht. Für die Kunden hat die räumlich enge Zuordnung der Erfassungsvorrichtungen den Vorteil, dass die bereits erfassten und in der Warensammelstelle bevorrateten Waren jederzeit in seinem direkten Blick- und Zugriffsbereich sind. Ein unbemerktes, unautorisiertes Entnehmen der Waren durch Unbefugte wird hierdurch erschwert bzw. unterbunden.

Zur Lösung der Aufgabe ist die Erfindung in Verbindung mit dem Oberbegriff des Patenanspruchs 8 dadurch gekennzeichnet, dass der zweite Zuführweg für den Transport von Waren eines zweiten Kunden gesperrt ist, sofern auf dem ersten Zuführweg Waren eines ersten Kunden in Richtung der Abtasteinrichtung transportiert werden, und vice versa.

Der besondere Vorteil der Erfindung gemäß Patentanspruch 8 besteht darin, dass eine eindeutige Zuordnung der mittels der Abtasteinrichtung gescannten Waren zu einem der potentiell zwei Kunden möglich ist. Einer Fehlzuordnung der Waren wird somit vorgebeugt. Insbesondere wird vermieden, dass die Ware fälschlicherweise nach dem Abtasten der Warensammelstelle eines ersten Kunden zugeführt, jedoch dem zweiten Kunden in Rechnung gestellt wird.

Nach einer bevorzugten Ausführungsform der Erfindung wird der zweite Zuführweg für den Transport von Waren des zweiten Kunden gesperrt, bis der Erfassungsvorgang aller Waren des ersten Kunden vollständig abgeschlossen ist. Das Ende des Erfassungsvorgangs kann beispielsweise durch die Entnahme der Waren aus der Warensammelstelle, durch den Beginn des Bezahlvorgangs oder durch die erfolgreiche Beendigung des Bezahlvorgangs gekennzeichnet sein. Dies gilt selbstverständlich auch für den ersten Zuführweg während der Erfassung der Waren des zweiten Kunden. Vorteilhaft ergibt sich hierdurch ein zeitlich sehr kompakter Erfassungsvorgang für den jeweils aktiven Kunden mit der Folge, dass die Erfassungsvorrichtung innerhalb kurzer Zeit vollständig freigegeben werden kann. Dient die Erfassungsvorrichtung als zentrale Erfassungsvorrichtung der oben skizzierten Erfassungsanordnung, kann der die zentrale Erfassungsvorrichtung jeweils nicht nutzende Kunde seine Waren gleichwohl über die ihm zugeordnete dezentrale Erfassungsvorrichtung manuell erfassen.

Nach einer Weiterbildung der Erfindung werden die Waren in der Reihenfolge ihres Auflegens auf die Transporteinrichtung transportiert und erfasst. Vorteilhaft kann die Erfassungsvorrichtung parallel von beiden Kunden genutzt werden mit der Folge, dass der Auslastungsgrad der Erfassungsvorrichtung besonders hoch ist.

Weitere Vorteile der Erfindung ergeben sich aus den weiteren Unteransprüchen.

Ausführungsbeispiele der Erfindung werden nachfolgend anhand der Figuren näher erläutert.

Es zeigen:
- Figur 1: eine erfindungsgemäße Erfassungsvorrichtung zur Erfassung von Waren in einer Prinzipdarstellung,
- Figur 2: eine Prinzipdarstellung einer ersten Verfahrensvariante zum Betrieb der Erfassungsvorrichtung nach Figur 1,
- Figur 3: eine Prinzipdarstellung einer zweiten Verfahrensvariante zum Betrieb der Erfassungsvorrichtung nach Figur 1 und
- Figur 4: eine die Erfassungsvorrichtung nach Figur 1 sowie zwei weitere, dezentrale Erfassungsvorrichtungen aufweisende Erfassungsanordnung.

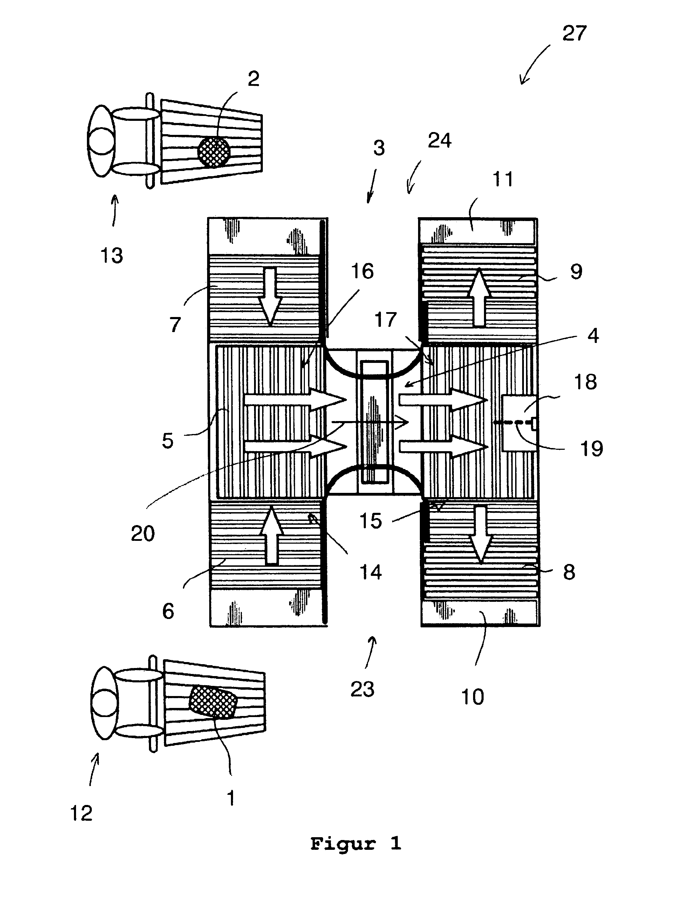

Eine Vorrichtung zum Erfassen von Waren 1, 2 nach Figur 1 umfasst als wesentliche Komponenten eine Transporteinrichtung 3 zum Transport der Waren 1, 2 sowie eine der Transporteinrichtung 3 ortsfest zugeordnete Abtasteinrichtung 4 zur berührungslosen optischen Abtastung der Waren 1, 2 während des Transports auf der Transporteinrichtung 3. Derartige Erfassungsvorrichtungen werden beispielsweise im Einzelhandel zur automatischen Erfassung von Waren an Selbstbedienungskassensystemen verwendet. Die Waren 1, 2 selbst bzw. ihre Verpackung wird hierbei mittels der beispielsweise als 360°-Scanner ausgebildeten Abtasteinrichtung 4 abgetastet zur Erfassung einer die Waren identifizierenden Markierung (beispielsweise Barcode). Die Vorrichtung kann beispielsweise als Tunnelscanner ausgebildet sein. Hierbei ist die Abtasteinrichtung 4 typischerweise mit einer Mehrzahl von Abtasteinheiten ausgestattet. Die Abtasteinheiten sind beispielsweise an einem die Transporteinrichtung 3 torbogenförmig überspannenden Gestell befestigt und zusätzlich unterhalb der Transporteinrichtung 3 derart angeordnet, dass durch eine Ausnehmung im Bereich der Transporteinrichtung 3 eine Auflageseite der Waren 1, 2 optisch erfasst werden kann.

Die Transporteinrichtung 3 umfasst nach dem vorliegenden Ausführungsbeispiel der Erfindung eine zentrale Transporteinheit 5, mittels derer die Waren 1, 2 im Bereich der Abtasteinrichtung 4 transportiert werden. Der zentralen Transporteinheit 5 werden die Waren 1, 2 mittels einer ersten dezentralen Transporteinheit 6 oder mittels einer zweiten dezentralen Transporteinheit 7 zugeführt. Mittels einer dritten dezentralen Transporteinheit 8 und einer vierten dezentralen Transporteinheit 9 können die Waren 1, 2 nach der Abtastung einer ersten Warensammelstelle 10 oder einer zweiten Warensammelstelle 1 zugeführt und dort bis zur Entnahme bevorratet werden.

Da die Transporteinrichtung 3 zwei dezentrale Transporteinheiten 6, 7 zum Zuführen der Waren zu der Abtasteinrichtung 4, zwei dezentrale Transporteinheiten 8, 9 zum Abtransport der Waren 1, 2 sowie zwei Warensammelstellen 10, 11 aufweist, kann die Abtasteinrichtung 4 gleichzeitig von bis zu zwei Kunden 12, 13 benutzt werden. Die Waren 1 des ersten Kunden 12 werden von dem Kunden 12 im Bereich der ersten dezentralen Transporteinheit 6 auf die Transporteinrichtung 3 aufgelegt und entlang eines ersten Zuführwegs 14 der Abtasteinrichtung 4 zugeführt. Die erfassten Waren 1 des ersten Kunden 12 werden anschließend über einen ersten Abfuhrweg 15 von der Abtasteinrichtung 4 in Richtung der ersten Warensammelstelle 10 transportiert. Entsprechend werden die Waren 2 des zweiten Kunden 13 im Bereich der zweiten dezentralen Transporteinheit 7 auf die Transporteinrichtung 3 aufgelegt und mittels der zweiten dezentralen Transporteinheit 7 und der zentralen Transporteinheit 5 entlang eines zweiten Zuführwegs 16 der Abtasteinrichtung 4 zugeführt. Die Waren 2 werden nach der Abtastung über einen zweiten Abfuhrweg 17 mittels der zentralen Transporteinheit 5 und der vierten dezentralen Transporteinheit 9 zur zweiten Warensammelstelle 11 transportiert und dort bis zur Entnahme der Waren 2 durch den zweiten Kunden 13 bevorratet. Hierbei sorgt eine lediglich schematisch dargestellte Sortiereinheit 18 mit einem schwenkbar angeordneten Stellglied 19 dafür, dass die Waren 1 des ersten Kunden 12 nach dem Abtasten derselben in Richtung der ersten Warensammelstelle 10 und die Waren 2 des zweiten Kunden 13 in Richtung der zweiten Warensammelstelle 11 umgelenkt werden. Selbstverständlich kann der anderen Sortiereinheit 18 - mit und ohne Stellglied 19 - versehen werden zum Umlenken der Waren 1, 2.

Die Transporteinrichtung 3 ist doppel-T-förmig ausgebildet. Von der zentralen Transporteinheit 5 ragen an einer Endseite derselben auf gegenüberliegenden Seiten die erste Transporteinheit 6 und die zweite Transporteinheit 7 und auf der gegenüberliegenden Endseite der zentralen Transporteinheit 5 die dritte Transporteinheit 8 und die vierte Transporteinheit 9 ab. Die Abtasteinrichtung 4 ist der zentralen Transporteinheit 5 der Transporteinrichtung 3 zwischen der ersten und zweiten dezentralen Transporteinheit 6, 7 einerseits und der dritten und vierten dezentralen Transporteinheit 8, 9 andererseits zugeordnet. Die Transporteinheiten 5, 6, 7, 8, 9 können beispielsweise ein oder mehrere umlaufende Transportbänder aufweisen, wobei die Waren 1, 2 auf einem Obertrum der Transportbänder gefördert werden. Beispielsweise können die Transporteinheiten 5, 6, 7, 8, 9 als Rollenförderer oder als Warenrutschen ausgebildet sein. Eine beliebige Kombination unterschiedlicher Ausführungsformen ist hierbei selbstverständlich möglich.

Zur Detektion von neu auf die Transporteinrichtung 3 aufgelegten Waren 1, 2 ist dem ersten Zuführweg 14 und dem Zuführweg 16 eine nicht dargestellte Sensorikeinheit zugeordnet. Mittels der Sensorikeinheit werden beispielsweise die erste und zweite dezentrale Transporteinheit 6, 7 überwacht. Die Sensorikeinheit weist beispielsweise einen Näherungssensor, einen Gewichtssensor oder einen Lichtschrankensensor zur Detektion neu auf der Transporteinrichtung 3 aufgelegter Waren auf.

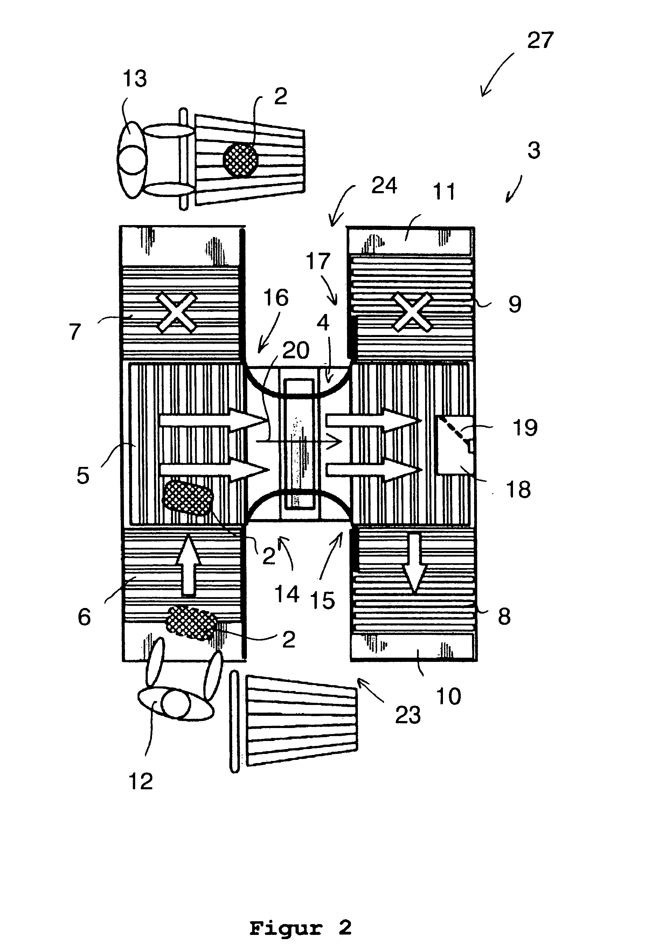

Figur 2 verdeutlicht ein erstes Verfahren zum Betrieb der Erfassungsvorrichtung nach Figur 1. Der erste Kunde 12 legt hierbei zwei Waren 1 im Bereich der ersten dezentralen Transporteinheit 6 auf die Transporteinrichtung 3 auf. Die Waren 1 werden entlang des ersten Zuführwegs 14 der Abtasteinrichtung 4 zugeführt. Nach dem Abtasten der Waren 1 werden die Waren 1 entlang des ersten Abfuhrwegs 15 weitertransportiert. Durch die in Transportrichtung 20 gesehen vor der Abtasteinrichtung 4 angeordnete Sortiereinheiten 19 werden die Waren 1 des ersten Kunden 12 in Richtung der ersten Warensammelstelle 10 umgelenkt. Die Sortiereinheit 19 ist hierzu in eine erste Sortierstellung verbracht, in der das Stellglied 19 derart über die zentrale Transporteinheit 5 der Transporteinrichtung 3 geschwenkt ist, dass die Waren 1 entlang einer Leitfläche des Stellglieds 19 in Richtung der zweiten Warensammelstelle 11 gleiten.

Während der Erfassung der Waren 1 des ersten Kunden 12 ist der zweite Zuführweg 16 für den zweiten Kunden 13 gesperrt. Der zweite Kunde 13 kann die Erfassungsvorrichtung nicht nutzen, so lange der erste Kunde 12 seine Waren 1 scannt. Ebenfalls ist der zweite Abfuhrweg 17, über den die Waren 2 des zweiten Kunden 13 der zweiten Warensammelstelle 11 zugeführt werden, durch das über die zentrale Transporteinheit 5 geschwenkte Stellglied 19 der Sortiereinheit gesperrt. Der erste Zuführweg 16 kann beispielsweise freigegeben werden, nachdem die Waren 1 des ersten Kunden 12 vollständig erfasst wurden. Ebenso ist eine Freigabe des zweiten Zuführwegs 16 denkbar, nachdem der erste Kunde 12 den sich an die Erfassung der Waren 1 anschließenden Bezahlvorgang eingeleitet oder diesen erfolgreich abgeschlossen hat.

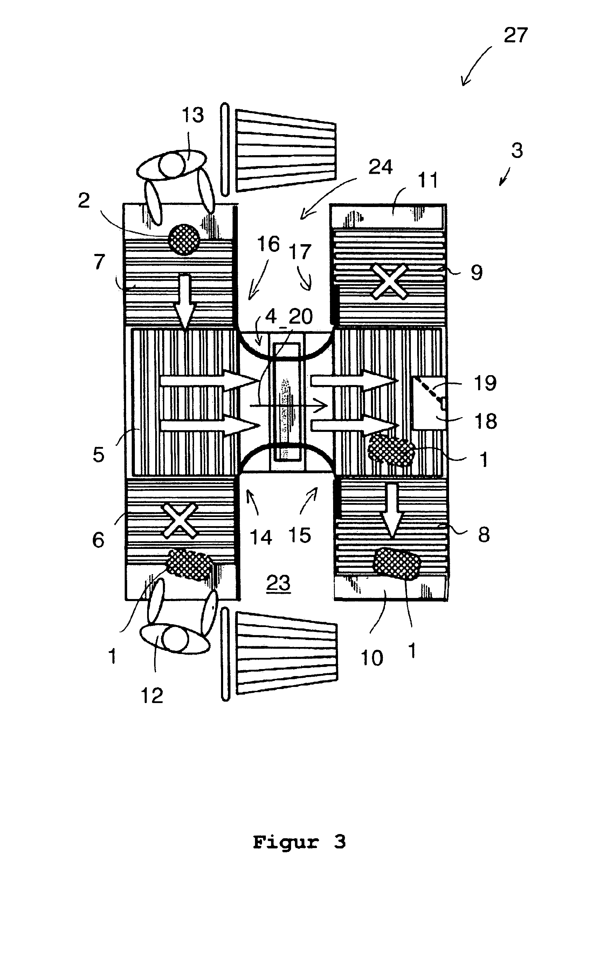

Figur 3 zeigt eine zweite Verfahrensalternative zum Betrieb der Erfassungsvorrichtung nach Figur 1. Hierbei werden die Waren 1, 2 des ersten und zweiten Kunden 12, 13 in einer beliebigen Reihenfolge der gemeinsamen Abtasteinrichtung 4 sequentiell zugeführt. Die Waren 1, 2 werden beispielsweise in der Reihenfolge ihres Auflegens auf die Transporteinrichtung 3 über eine der beiden dezentralen Transporteinheiten 6, 7 zunächst der zentralen Transporteinheit 5 zugeführt und gescannt. Nach dem Scannen wird das Stellglied 19 der Sortiereinheit 18 derart in die erste Sortierstellung oder in die zweite Sortierstellung gebracht, dass über den ersten Zuführweg 14 zugeführte Waren 1 des ersten Kunden 12 entlang des ersten Abfuhrweg 15 der dritten dezentralen Transporteinheit 8 und der ersten Warensammelstelle 10 zugeführt werden. Die Waren 2 des zweiten Kunden 13 werden dementsprechend in der zweiten Sortierstellung der Sortiereinheit 18 entlang des zweiten Abfuhrwegs 17 der zweiten dezentralen Transporteinheit 9 zugeführt und in der zweiten Warensammelstelle 11 bevorratet. Hierbei ist der erste Zuführweg 14 gesperrt, während Waren 2 des zweiten Kunden 13 über den zweiten Zuführweg 16 der gemeinsamen Abtasteinrichtung 4 zugeführt werden. Der erste Zuführweg 14 wird jedoch freigegeben, noch bevor alle Waren 2 des zweiten Kunden 13 erfasst sind. Beispielsweise können je eine Ware 1 des ersten Kunden 12 und je eine Ware 2 des zweiten Kunden 13 abwechselnd transportiert und erfasst werden. Insbesondere kann, wie dargestellt, die soeben gescannte Ware 1 des ersten Kunden 12 über den ersten Abfuhrweg 15 der ersten Warensammelstelle 10 und die Ware 2 des zweiten Kunden 13 über den zweiten Zuführweg 16 der gemeinsamen Abtasteinrichtung 4 zugeführt werden. In diesem Fallbeispiel sind der zweite Zuführweg 16 und der erste Abfuhrweg 15 freigegeben und der erste Zuführweg 14 und der zweite Abfuhrweg 17 gesperrt.

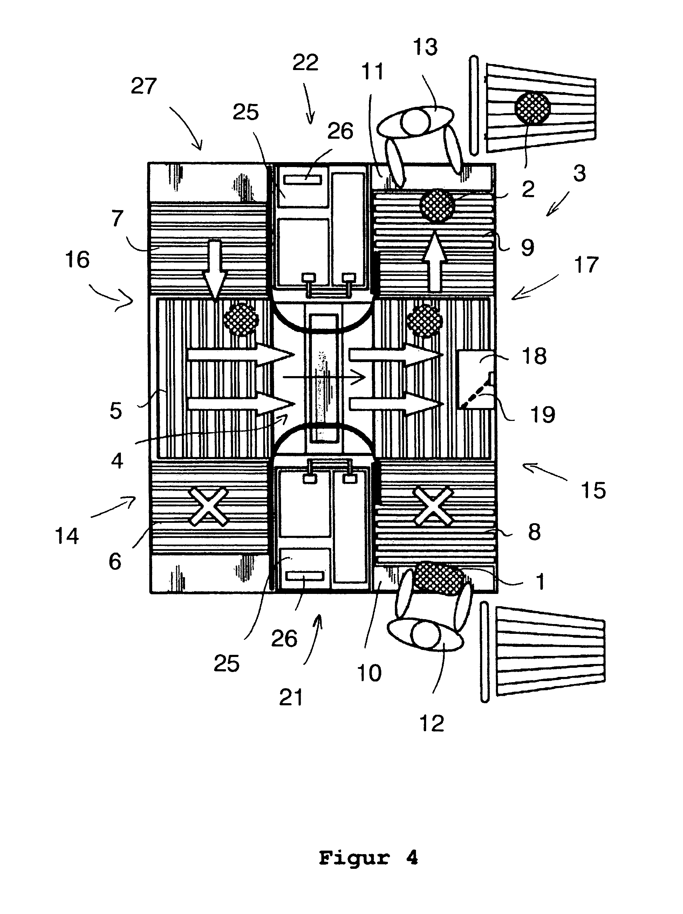

Nach einer Weiterbildung der Erfindung kann eine Erfassungsanordnung nach Figur 4 die doppel-T-förmige Erfassungsvorrichtung nach Figur 1 als zentrale Erfassungsvorrichtung 27 sowie zwei weitere, manuell betätigbare dezentrale Erfassungsvorrichtungen 21, 22 aufweisen. Die erste dezentrale Erfassungsvorrichtung 21 ist hierbei dem ersten Kunden 12 zugeordnet. Die zweite dezentrale Erfassungsvorrichtung 22 steht dem zweiten Kunden 13 zur Verfügung. Die dezentralen Erfassungsvorrichtungen 21, 22 sind im Bereich gegenüberliegender Ausnehmungen 23, 24 der doppel-T-förmigen zentralen Erfassungsvorrichtung 27 angeordnet. Der erste Zuführweg 14 und der erste Abfuhrweg 15 umgeben die erste dezentrale Erfassungsvorrichtung 21 U-förmig. Ebenso umgeben der zweite Zuführweg 16 und der zweite Abfuhrweg 17 die zweite dezentrale Erfassungsvorrichtung 22 U-förmig.

Auf diese Weise bildet die Erfassungsanordnung eine Erfassungsinsel mit drei Erfassungsvorrichtungen 21, 22, 27, die von den zwei Kunden 12, 13 zeitgleich genutzt werden kann. Dem ersten Kunden 12 stehen die zentrale Erfassungsvorrichtung 27 und die erste dezentrale Erfassungsvorrichtung 21 für die Erfassung seiner Waren 1 zur Verfügung. Der erste Kunde 12 entscheidet hierbei, welche Waren 1 er mittels der zentralen Erfassungsvorrichtung 27 und welche anderen Waren 1 er mittels der dezentralen Erfassungsvorrichtung 21 scannt.

Die dezentralen Erfassungsvorrichtung 21, 22 sind beispielsweise als sogenannte Scan-and-Bag-Vorrichtungen ausgebildet. Sie weisen hierbei eine Auflagefläche 25 zur Auflage der Waren 1, 2 während der Erfassung, eine Abtasteinrichtung 26 mit einer oder mehrerer Abtasteinheiten zur optischen, berührungslosen Abtastung der Waren 1, 2 sowie eine der Auflagefläche 25 zugeordnete, nicht dargestellte Wägeeinheit zur Ermittlung eines Gewichts der Waren 1, 2. Der zentralen Erfassungsvorrichtung 27 sowie den dezentralen Erfassungsvorrichtungen 21, 22 ist eine nicht dargestellte Bezahleinheit zugeordnet. Die Bezahleinrichtung ist datentechnisch sowohl mit der zentralen Erfassungsvorrichtung 27 als auch den dezentralen Erfassungsvorrichtungen 21, 22 verbunden. Hierdurch kann der Kunde 12, 13 seine gesamten Waren 1, 2 in einem einheitlichen Bezahlvorgang bezahlen unabhängig davon, ob er alle Waren 1, 2 mittels der zentralen Erfassungsvorrichtung 27, alle Waren 1, 2 mittels der ihm zugeordneten dezentralen Erfassungsvorrichtung 21, 22 oder seine Waren 1, 2 gemischt teilweise mit der dezentralen Erfassungsvorrichtung 21, 22 und teilweise mit der zentralen Erfassungsvorrichtung 27 der erfindungsgemäßen Erfassungsanordnung gescannt hat.

### Bezugszeichenliste

| | | | |
|---|---|---|---|
| 1 | Waren | 24 | Ausnehmungen |
| 2 | Waren | 25 | Anlagefläche |
| 3 | Transporteinrichtung | 26 | Abtasteinheit |
| 4 | Abtasteinrichtung | 27 | zentrale Erfassungsvorrichtung |
| 5 | zentrale Transporteinheit | | |
| 6 | erste dezentrale Transporteinheit | | |
| 7 | zweite dezentrale Transporteinheit | | |
| 8 | dritte dezentrale Transporteinheit | | |
| 9 | vierte dezentrale Transporteinheit | | |
| 10 | erste Warensammelstelle | | |
| 11 | zweite Warensammelstelle | | |
| 12 | erster Kunde | | |
| 13 | zweiter Kunde | | |
| 14 | erster Zuführweg | | |
| 15 | erster Abfuhrweg | | |
| 16 | zweiter Zuführweg | | |
| 17 | zweiter Abfuhrweg | | |
| 18 | Sortiereinheit | | |
| 19 | Stellglied | | |
| 20 | Transportrichtung | | |
| 21 | erste dezentrale Erfassungsvorrichtung | | |
| 22 | zweite dezentrale Erfassungsvorrichtung | | |
| 23 | Ausnehmungen | | |

## Patentansprüche

1. Vorrichtung zum Erfassen von Waren, insbesondere zum Erfassen einer die Waren identifizierenden Markierung, an einem Selbstbedienungskassensystem mit einer Transporteinrichtung zum Transportieren der Waren und mit einer ortsfest an der Transporteinrichtung angeordneten Abtasteinrichtung zum berührungslosen optischen Abtasten der Waren während des Transports, dass die Transporteinrichtung Mittel aufweist, um Waren (1, 2) der Abtasteinrichtung (4) über einen ersten Zuführweg (14) und über einen zweiten Zuführweg (16) zuzuführen, um über den ersten Zuführweg (14) zugeführte Waren (1) nach der Erfassung über einen ersten Abfuhrweg (15) einer ersten Warensammelstelle (10) zuzuführen und um über den zweiten Zuführweg (16) zugeführte Waren (2) nach dem Erfassen über einen zweiten Abfuhrweg (17) einer zweiten Warensammelstelle (11) zuzuführen,
- eine zentrale Transporteinheit (5) zum Transport der Waren (1, 2) in eine Transportrichtung (20) während des Abtastens derselben mittels der Abtasteinrichtung (4)
- eine dem ersten Zuführweg (14) zugeordnete erste dezentrale Transporteinheit (6) zum Zuführen der Waren (1) entlang des ersten Zuführwegs (14) zu der zentralen Transporteinheit (5) und
- eine dem zweiten Zuführweg (16) zugeordnete zweite dezentrale Transporteinheit (7) zum Zuführen der Waren (2) auf dem zweiten Zuführweg (14) zu der zentralen Transporteinheit (5) und
- eine dem ersten Abfuhrweg (15) zugeordnete dritte dezentrale Transporteinheit (8) zum Transportieren der Waren (1) auf dem ersten Abfuhrweg (15) in Richtung der ersten Warensammelstelle (10) und
- eine dem zweiten Abfuhrweg (17) zugeordnete vierte dezentrale Transporteinheit (9) zum Transport der Waren (2) auf dem zweiten Abfuhrweg (17) in Richtung der zweiten Warensammelstelle (11),
- **dadurch gekennzeichnet dass,**
- dass die Transporteinrichtung doppel-T-förmig ausgebildet ist
- wobei die erste Transporteinheit und die zweite Transporteinheit an einer Endseite der zentralen Transporteinheit auf gegenüberliegenden Seiten abragen und
- die dritte und die vierte Transporteinheit auf der gegenüberliegenden Endseite der zentralen Transporteinheit auf gegenüberliegenden Seiten abragen

2. Vorrichtung nach Anspruch 1, **dadurch gekennzeichnet, dass** die Transporteinrichtung (3) aufweist,
- eine der zentralen Transporteinheit (5) zugeordnete und in Transportrichtung (20) gesehen vor der Abtasteinrichtung (4) angeordnete Sortiereinheit (18) mit einem Stellglied (19) zum Umlenken der Waren, wobei das Stellglied in einer ersten Sortierstellung der Sortiereinheit (18) derart angeordnet ist, dass die auf der zentralen Transporteinheit (5) transportierten Waren (1) in Richtung der ersten Warensammelstelle (10) auf dem ersten Abfuhrweg (15) geführt werden, und wobei das Stellglied (19) in einer zweiten Sortierstellung der Sortiereinheit (18) derart angeordnet ist, dass die auf der zentralen Transporteinheit (5) transportierten Waren (29) in Richtung der zweiten Warensammelstelle (11) auf dem zweiten Abfuhrweg (17) geführt werden.

3. Vorrichtung nach Anspruch 1 oder 2, **dadurch gekennzeichnet, dass** der ersten dezentralen Transporteinheit (6) und der zweiten dezentralen Transporteinheit (7) eine Sensorikeinheit zugeordnet ist derart, dass ein Auflegen von Waren (1, 3) durch den Kunden auf die Transporteinrichtung (3) von der Sensorikeinheit erkannt wird.

4. Vorrichtung nach einem der Ansprüche 1 bis 3, **dadurch gekennzeichnet, dass** die Sensorikeinheit einen Näherungssensor und/oder einen Gewichtssensor und/oder einen Lichtschrankensensor aufweist zur Erkennung von auf die Transporteinrichtung (3) aufgelegten und der Abtasteinrichtung (4) zuzuführenden Waren (1, 2).

5. Anordnung zum Erfassen von Waren, insbesondere zum Erfassen einer die Waren identifizierenden Markierung, an einem Selbstbedienungskassensystem mit einer zentralen Erfassungsvorrichtung für Waren nach einem der Ansprüche 1 bis 4, **dadurch gekennzeichnet, dass** der zentralen Erfassungsvorrichtung mindestens zwei dezentrale Erfassungsvorrichtungen (21, 22) als manuelle Erfassungsvorrichtungen zugeordnet sind mit jeweils einer Auflagefläche (25) für die mittels der dezentralen Erfassungsvorrichtung (21, 22) zu erfassenden Waren (1, 2), mit einer der Auflagefläche (25) zugeordneten Abtasteinheit (26) und mit einer der Auflagefläche (25) zugeordneten Wägeeinheit zum Ermitteln eines Gewichts der mittels der dezentralen Erfassungseinheit (21, 22) zu erfassenden Waren (1, 2), wobei eine erste dezentrale Erfassungsvorrichtung (21) dem ersten Zuführweg (14), dem ersten Abfuhrweg (15) und der ersten Warensammelstelle (10) und eine zweite dezentrale Erfassungsvorrichtung (22) dem zweiten Zuführweg (16), dem zweiten Abfuhrweg (17) und der zweiten Warensammelstelle (11) der zentralen Erfassungsvorrichtung zugeordnet sind.

6. Anordnung nach Anspruch 5, **dadurch gekennzeichnet, dass** wenigstens eine Bezahleinrichtung angeordnet ist, die derart datentechnisch mit der zentralen Erfassungsvorrichtung und den dezentralen Erfassungsvorrichtungen (21, 22) zusammenwirkt, dass ein Kunde (12, 13) alle seine mittels der zentralen Erfassungseinheit und/oder der zu dem von den Kunden gewählten Zuführung korrespondierenden dezentralen Erfassungseinheiten (21, 22) erfassten Waren (1, 2) in einem einzigen Bezahlvorgang bezahlen kann.

7. Anordnung nach Anspruch 5 oder 6, **dadurch gekennzeichnet, dass** die zentrale Erfassungsvorrichtung doppel-T-förmig ausgebildet ist, wobei in gegenüberliegenden Ausnehmungen (23, 24) der doppel-T-förmigen zentralen Erfassungsvorrichtung jeweils eine der beiden dezentralen Erfassungsvorrichtungen (21, 22) angeordnet ist und wobei der erste Zuführweg (14) und der erste Abfuhrweg (15) die erste dezentrale Erfassungsvorrichtung (21) und der zweite Zuführweg (16) und der zweite Abfuhrweg (17) die zweite dezentrale Erfassungsvorrichtung (22) U-förmig umgeben.

## Claims

1. Device for detecting goods, in particular for detecting a marking which identifies the goods, on a self-service checkout system having a conveying unit for conveying the goods, and having a scanning unit, which is disposed so as to be locationally fixed on the conveying unit, for optically scanning the goods in a non-contacting manner during conveying, wherein the conveying unit includes means for supplying goods (1, 2) to the scanning unit (4) via a first supply path (14) and via a second supply path (16) in order to supply goods (1) which are supplied via the first supply path (14) after detection via a first discharge path (15) to a first goods collection point (10), and in order to supply goods (2) which are supplied via the second supply path (16) after detection via a second discharge path (17) to a second goods collection point (11),
- a central conveying unit (5) for conveying the goods (1, 2) in a conveying direction (20) during scanning of said goods by means of the scanning unit (4),
- a first decentralized conveying unit (6), assigned to the first supply path (14), for supplying the goods (1) along the first supply path (14) to the central conveying unit (5), and
- a second decentralized conveying unit (7), assigned to the second supply path (16), for supplying the goods (2) on the second supply path (14) to the central conveying unit (5), and
- a third decentralized conveying unit (8), assigned to the first discharge path (15), for conveying the goods (1) on the first discharge path (15) in the direction of the first goods collection point (10), and
- a fourth decentralized conveying unit (9), assigned to the second discharge path (17), for conveying the goods (2) on the second discharge path (17) in the direction of the second goods collection point (11),
**characterized in that**
- the conveying unit is configured in a double-T shape,
- wherein the first conveying unit and the second conveying unit at one end side of the central conveying unit protrude on opposite sides, and
- the third and the fourth conveying unit at the opposite end side of the central conveying unit protrude on opposite sides.

2. Device according to Claim 1, **characterized in that** the conveying unit (3) includes
- a sorting unit (18) which is assigned to the central conveying unit (5) and, when viewed in the conveying direction (20), is disposed ahead of the scanning unit (4), having an actuating member (19) for deflecting the goods, wherein the actuating member in a first sorting position of the sorting unit (18) is disposed in such a manner that the goods (1) being conveyed on the central conveying unit (5) are guided on the first discharge path (15) in the direction of the first goods collection point (10), and wherein the actuating member (19) in a second sorting position of the sorting unit (18) is disposed in such a manner that the goods (29) being conveyed on the central conveying unit (5) are guided on the second discharge path (17) in the direction of the second goods collection point (11).

3. Device according to Claim 1 or 2, **characterized in that** a sensor unit is assigned in such a manner to the first decentralized conveying unit (6) and to the second decentralized conveying unit (7) that placing of goods (1, 2) onto the conveying unit (3) by the customer is recognized by the sensor unit.

4. Device according to one of Claims 1 to 3, **characterized in that** the sensor unit includes a proximity sensor and/or a weight sensor and/or a light-beam sensor for recognizing goods (1, 2) which are placed onto the conveying unit (3) and to be supplied to the scanning unit (4).

5. Assembly for detecting goods, in particular for detecting a marking which identifies the goods, on a self-service checkout system having a central detecting device for goods according to one of Claims 1 to 4, **characterized in that** the central detecting device is assigned at least two decentralized detecting devices (21, 22) as manual detecting devices, having in each case one bearing face (25) for the goods (1, 2) to be detected by means of the decentralized detecting device (21, 22), having a scanning unit (26) assigned to the bearing face (25), and having a weighing unit which is assigned to the bearing face (25) for determining a weight of the goods (1, 2) to be detected by means of the decentralized detecting unit (21, 22), wherein a first decentralized detecting device (21) is assigned to the first supply patch (14), to the first discharge path (15) and to the first goods collection point (10), and a second decentralized detecting device (22) is assigned to the second supply path (16), to the second discharge path (17) and to the second goods collection point (11) of the central detecting device.

6. Assembly according to Claim 5, **characterized in that** at least one payment unit which interacts in such a manner in terms of data technology with the central detecting device and the decentralized detecting devices (21, 22) that a customer (12, 13) may pay for all his/her goods (1, 2) which have been detected by means of the central detecting unit and/or by the decentralized detecting units (21, 22) which correspond to the supply path selected by the customer in a single payment operation is provided.

7. Assembly according to Claim 5 or 6, **characterized in that** the central detecting device is configured in a double-T shape, wherein in each case one of the two decentralized detecting devices (21, 22) is disposed in mutually opposite recesses (23, 24) of the double-T shaped central detecting device, and wherein the first supply path (14) and the first discharge path (15) surround the first decentralized detecting device (21) in a U-shaped manner, and the second supply path (16) and the second discharge path (17) surround the second decentralized detecting device (22) in a U-shaped manner.

## Revendications

1. Dispositif de détection de marchandises, en particulier de détection d'un marquage identifiant les marchandises, sur un système de caisse self-service comprenant un dispositif de transport pour transporter les marchandises et un dispositif de balayage disposé fixement sur le dispositif de transport pour balayer optiquement sans contact les marchandises pendant le transport, le dispositif de transport présentant des moyens pour acheminer des marchandises (1, 2) au dispositif de balayage (4) par le biais d'une première voie d'acheminement (14) par le biais d'une deuxième voie d'acheminement (16) afin d'acheminer des marchandises (1) acheminées par le biais de la première voie d'acheminement (14) après la détection par le biais d'une première voie d'évacuation (15) à un premier point de collecte des marchandises (10) et afin d'acheminer des marchandises (2) acheminées par le biais de la deuxième voie d'acheminement (16) après la détection par le biais d'une deuxième voie d'évacuation (17) à un deuxième point de collecte des marchandises (11),
- une unité de transport centrale (5) pour transporter les marchandises (1, 2) dans une direction de transport (20) pendant le balayage de celles-ci au moyen du dispositif de balayage (4),
- une première unité de transport décentrée (6) associée à la première voie d'acheminement (14) pour acheminer les marchandises (1) le long de la première voie d'acheminement (14) jusqu'à l'unité de transport centrale (5) et
- une deuxième unité de transport décentrée (7) associée à la deuxième voie d'acheminement (16) pour acheminer les marchandises (2) sur la deuxième voie d'acheminement (14) jusqu'à l'unité de transport centrale (5) et
- une troisième unité de transport décentrée (8) associée à la première voie d'évacuation (15) pour transporter les marchandises (1) sur la première voie d'évacuation (15) dans la direction du premier point de collecte des marchandises (10) et
- une quatrième unité de transport décentrée (9) associée à la deuxième voie d'évacuation (17) pour transporter les marchandises (2) sur la deuxième voie d'évacuation (17) dans la direction du deuxième point de collecte des marchandises (11),
**caractérisé en ce que**
- le dispositif de transport est réalisé en forme de double T,
- la première unité de transport et la deuxième unité de transport dépassant à une extrémité de l'unité de transport centrale sur des côtés opposés et
- la troisième et la quatrième unité de transport dépassant à l'extrémité opposée de l'unité de transport centrale sur des côtés opposés.

2. Dispositif selon la revendication 1, **caractérisé en ce que** le dispositif de transport (3) présente
- une unité de triage (18) associée à l'unité de transport centrale (5) et, vu dans la direction de transport (20), disposée avant le dispositif de balayage (4), avec un actionneur (19) pour dévier les marchandises, l'actionneur étant disposé dans une première position de triage de l'unité de triage (18) de telle sorte que les marchandises (1) transportées sur l'unité de transport centrale (5) soient guidées dans la direction du premier point de collecte des marchandises (10) sur la première voie d'évacuation (15), et l'actionneur (19) étant disposé dans une deuxième position de triage de l'unité de triage (18) de telle sorte que les marchandises (29) transportées sur l'unité de transport centrale (5) soient guidées dans la direction du deuxième point de collecte des marchandises (11) sur la deuxième voie d'évacuation (17).

3. Dispositif selon la revendication 1 ou 2, **caractérisé en ce que** la première unité de transport décentrée (6) et la deuxième unité de transport décentrée (7) sont associées à une unité de détection de telle sorte qu'une dépose de marchandises (1, 2) par le client sur le dispositif de transport (3) soit détectée par l'unité de détection.

4. Dispositif selon l'une quelconque des revendications 1 à 3, **caractérisé en ce que** l'unité de détection présente un capteur de proximité et/ou un capteur de poids et/ou un capteur à barrière lumineuse pour détecter des marchandises (1, 2) déposées sur le dispositif de transport (3) et devant être acheminées au dispositif de balayage (4).

5. Agencement pour détecter des marchandises, en particulier pour détecter un marquage identifiant les marchandises, sur un système de caisse self-service, comprenant un dispositif de détection central pour des marchandises selon l'une quelconque des revendications 1 à 4, **caractérisé en ce qu'**au moins deux dispositifs de détection décentrés (21, 22) sont associés au dispositif de détection central en tant que dispositifs de détection manuels avec à chaque fois une surface d'appui (25) pour les marchandises (1, 2) devant être détectées au moyen du dispositif de détection décentré (21, 22), avec une unité de balayage (26) associée à la surface d'appui (25) et avec une unité de pesée associée à la surface d'appui (25) pour déterminer un poids des marchandises (1, 2) devant être détectées au moyen de l'unité de détection décentrée (21, 22), un premier dispositif de détection décentré (21) étant associé à la première voie d'acheminement (14), à la première voie d'évacuation (15) et au premier point de collecte des marchandises (10) et un deuxième dispositif de détection décentré (22) étant associé à la deuxième voie d'acheminement (16), à la deuxième voie d'évacuation (17) et au deuxième point de collecte des marchandises (11) du dispositif de détection central.

6. Agencement selon la revendication 5, **caractérisé en ce qu'**au moins un dispositif de paiement est prévu, lequel coopère par une technique de données avec le dispositif de détection central et les dispositifs de détection décentrés (21, 22) de telle sorte qu'un client (12, 13) puisse payer en une seule opération de paiement toutes ses marchandises (1, 2) détectées au moyen de l'unité de détection centrale et/ou des unités de détection décentrées (21, 22) correspondant à l'acheminement sélectionné par les clients.

7. Agencement selon la revendication 5 ou 6, **caractérisé en ce que** le dispositif de détection central est réalisé en forme de double T, à chaque fois l'un des deux dispositifs de détection décentrés (21, 22) étant disposé dans des évidements opposés (23, 24) du dispositif de détection central en forme de double T, et la première voie d'acheminement (14) et la première voie d'évacuation (15) entourant en forme de U le premier dispositif de détection décentré (21), et la deuxième voie d'acheminement (16) et la deuxième voie d'évacuation (17) entourant en forme de U le deuxième dispositif de détection décentré (22).
